# EUROPEAN PATENT APPLICATION

(11) **EP 2 599 849 A1**
(43) Date of publication of application: **05.06.2013**
(21) Application number: 11191284.6
(22) Date of filing: 30.11.2011
(51) Int. Cl.: C09K 8/54, C23F 11/00

(54) **Method of inhibiting corrosion of a downhole casing**

(71) Applicant: Welltec A/S, 3450 Allerød (DK)
(72) Inventor: Hallundbæk, Jørgen, 3230 Græsted (DK)
(74) Representative: Hoffmann Dragsted A/S

(57) **Abstract**

The present invention relates to a method of inhibiting corrosion of a downhole casing having an inner surface. The method comprises the step of contacting said inner surface of the downhole casing with an oxidoreductase enzyme, wherein inhibiting occurs in less than about 5 hours.

## Description

### Field of the invention

The present invention relates to a method of inhibiting corrosion of a downhole casing having an inner surface.

### Background art

Downhole borehole operations are becoming more and more sophisticated with regard to tool operations downhole, but also with regard to the complexity of borehole casing parts such as valves, sliding sleeves, production zones etc. This increased complexity results in an increased demand for solutions as to how to avoid undesirable effects such as corrosion and fouling of the borehole casing parts. Chemical and biological incrustation is a major cause of decreased well performance and eventual failure. Fouling can be described as clogging and failure of mechanical downhole parts e.g. due to corrosion or the growth of microorganisms, such as bacteria or archaea. The dual effect of the growing microorganisms and the precipitating minerals can plug and close valves and sliding sleeves within a relatively short period of time. Hence, a need exists for an effective method for avoiding corrosion or fouling in downhole environments.

### Summary of the invention

It is an object of the present invention to wholly or partly overcome the above disadvantages and drawbacks of the prior art. More specifically, it is an object to provide a method which is simpler and more effective than mechanical cleaning as well as cheaper and less toxic than chemical cleaning.

The above objects, together with numerous other objects, advantages, and features, which will become evident from the below description, are accomplished by a solution in accordance with the present invention by a method of inhibiting corrosion of a downhole casing having an inner surface, comprising the step of:
- contacting said inner surface of the downhole casing with an oxidoreductase enzyme, wherein inhibiting occurs in less than about 5 hours.

The method may further comprise the step of sealing off a section of the borehole casing with a flow hindering element. In order to e.g. increase concentration levels of enzymes near the inner wall of the borehole casing, the section where enzymes are to contact the wall may be sealed off or screened in some way to ensure elevated concentration levels.

Moreover, the method as described above may further comprise the step of reducing microaerobic growth of organisms in a downhole biofilm on the inner surface of the casing, or killing organisms in said biofilm.

Also, the method as described above of inhibiting a downhole biofilm on an inner surface of a downhole casing may comprise the step of contacting said downhole biofilm with an oxidoreductase enzyme, wherein inhibiting occurs in less than about 5 hours.

Preferably, inhibiting may also occur in less than about 4 hours.

Furthermore, the method as described above may comprise the step of bacteriostatically reducing microaerobic growth of organisms in the downhole biofilm on the inner surface of the casing, or bactericidally killing organisms in said biofilm.

In one embodiment, a bacteria in said biofilm may be an anaerobe bacteria.

In another embodiment, a bacteria in said biofilm may be an aerobe bacteria.

In one embodiment, a microorganism in said biofilm may be an anaerobe archaea.

In another embodiment, a microorganism in said biofilm may be an aerobe archaea.

Moreover, said downhole biofilm may comprise two or more bacterial species.

Further, said downhole biofilm may comprise two or more archaea species.

Also, said downhole biofilm may comprise two or more microorganisms selected from the group consisting of bacteria, fungi, algae, archaea and archaebacteria.

The oxidoreductase enzyme used in the method may be selected from the group consisting of NADH peroxidase, NADPH peroxidase, fatty-acid peroxidase, cytochrome-c peroxidase, catalase, peroxidase, iodide peroxidase, glutathione peroxidase, chloride peroxidase, L-ascorbate peroxidase, phospholipid-hydroperoxide glutathione peroxidase, manganese peroxidase, lignin peroxidase, peroxiredoxin, versatile peroxidase, glutathione amide-dependent peroxidase, bromide peroxidase, dye decolourising peroxidase, prostamide/prostaglandin F2a synthase and catalase-peroxidase.

In one embodiment, said oxidoreductase enzyme may be a haloperoxidase selected from a group of haloperoxidases consisting of chloroperoxidase, bromoperoxidase and iodoperoxidase.

In addition, said oxidoreductase enzyme may comprise a plurality of haloperoxidase enzymes selected from the group of haloperoxidases consisting of chloroperoxidase, bromoperoxidase and iodoperoxidase.

Furthermore, said oxidoreductase enzyme may be viable at temperatures exceeding 100 degrees Celsius.

Also, the present invention relates to a method of inhibiting microbial biofilm-induced corrosion or fouling of a surface or mechanical device comprising treating a surface biofilm or mechanical device biofilm with an oxidoreductase enzyme.

Said surface may be comprised in an oil and gas well drilling system.

Moreover, the contacting of said inner surface of the downhole casing with an oxidoreductase enzyme may comprise the steps of: providing a fluid comprising the oxidoreductase enzymes in a fluid chamber of a jetting tool, activating a pumping device in the jetting tool and pressurising the fluid chamber of the jetting tool, jetting the fluid through a nozzle head towards the inner surface of the casing in a jet stream, and contacting the inner surface of the casing with an oxidoreductase enzyme in a jet stream.

Further, the fluid chamber may be cooled. Since the activity of enzymes may be deteriorated by elevated temperatures, the fluid chamber containing the enzymes may be cooled below a critical temperature, such that all enzymes are viable when applied downhole in the borehole. Temperature fluctuations downhole may be caused by various different effects such as high temperature fluids flowing past the tool, high temperature regions of the formation e.g. due to proximity of magma layers, explosions during perforations and so on. Therefore, temperature control of the fluid chamber may help avoid damages to the enzymes downhole.

The method as described above may further comprise an initial cleaning step of cleaning rigid debris and other precipitated materials, such as scales, by application of a mechanical cleaning tool comprising brushes for brushing the interior of a casing downhole in order to clean the casing to be substantially free from the rigid debris and other precipitated materials.

Additionally, this method may further comprise an initial cleaning step of cleaning rigid debris and other precipitated materials, such as scales, by application of a jetting cleaning tool having a longitudinal direction and comprising a rotatable nozzle head having a plurality of nozzles, the jetting tool being adapted to provide a jet stream to the interior of a casing downhole in order to clean the casing to be substantially free from the rigid debris and other precipitated materials.

Moreover, the method as described above may further comprise a final step of arranging a wax layer on the inner surface of the casing comprising the steps of: providing a fluid comprising wax particles in a first casing part, activating a pumping device and pressurising the first casing part, jetting the fluid comprising wax particles through a nozzle head towards the inner surface of the casing in the second casing part in a jet stream, and arranging the wax layer on the inner surface of the casing by the jet stream.

In one embodiment, the wax particles may comprise ceramic particles having a significantly higher density than the wax.

Also, the particles may be made of metal.

Furthermore, the wax particles may comprise magnetic particles, wherein the wax particles comprising magnetic particles are retained near the casing wall due to magnetic attraction between the casing and the magnetic particles.

The method as described above may further comprise a final step of arranging a layer of nanoparticles on the inner surface of the casing comprising the steps of: providing a liquid comprising nanoparticles in a first casing part, activating a pumping device and pressurising the first casing part, jetting the liquid through a nozzle head towards the inner surface of the casing in the second casing part in a jet stream, and arranging the layer of nanoparticles on the inner surface of the casing by the jet stream.

In addition, the method as described above may further comprise an initial preparation step of preparing surfaces of downhole casing parts such as casings, pipes, tubes, valves, plugs, collars which may come in contact with borehole fluids comprising the steps of: coating a surface of a casing part with a nanocover material, and mounting the coated casing part to the casing.

Finally, the method as described above may further comprise an initial preparation step of preparing surfaces of downhole casing parts such as casings, pipes, tubes, valves, plugs, collars which may come in contact with borehole fluids comprising the steps of: lowering a coating tool into the borehole, and coating at least a surface of a casing part with a nanocover material.

In one embodiment, the nanocover material may be graphene.

Moreover, the nanocover may be below 500 nanometers in thickness, such as below 100 nm, such as below 50 nm, such as below 20nm, such as below 10nm.

### Brief description of the drawings

The invention and its many advantages will be described in more detail below with reference to the accompanying schematic drawings, which for the purpose of illustration show some non-limiting embodiments and in which
Fig. 1 shows a schematic diagram of a tool for carrying out a method according to the invention,
Fig. 2 is a schematic close-up view of a biofilm on an inner surface of a borehole casing,
Fig. 3 is a schematic diagram of a tool for carrying out a method according to the invention arranged in a section of a borehole casing comprising a mechanical sliding sleeve,
Fig. 4 shows a schematic diagram of a tool for carrying out a method according to the invention by means of a jetting stream, and
Fig. 5 shows a schematic diagram of a tool for carrying out a method according to the invention further comprising a mechanical cleaning brush.

All the figures are highly schematic and not necessarily to scale, and they show only those parts which are necessary in order to elucidate the invention, other parts being omitted or merely suggested.

### Detailed description of the invention

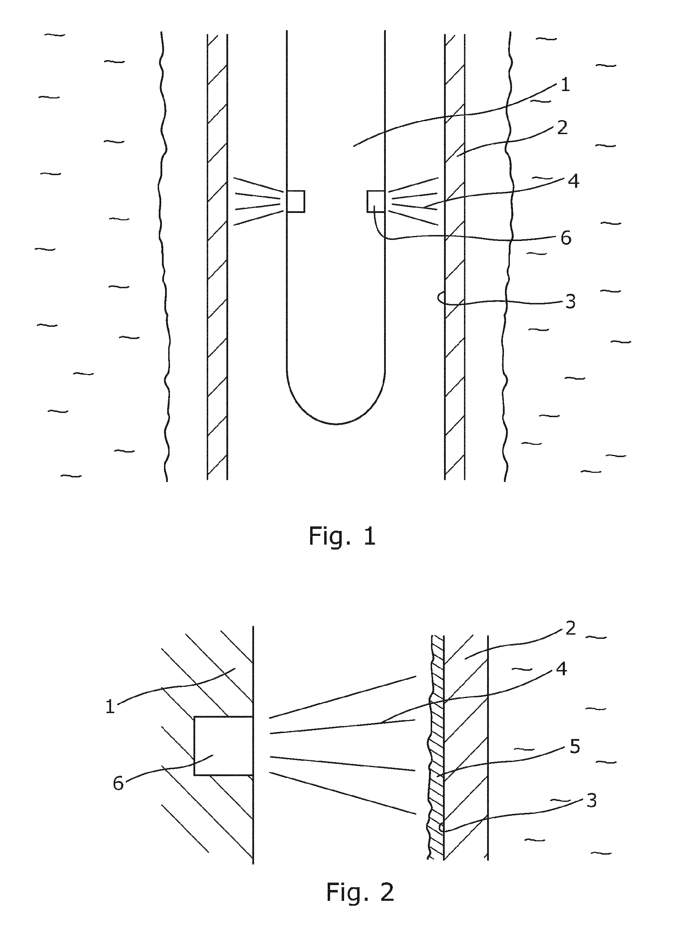

The invention relates to a method of inhibiting corrosion of a downhole casing 2. Fig. 1 shows a tool 1 for carrying out a method according to the invention. Fig. 1 shows how an oxidoreductase enzyme 4 is ejected from an ejecting member 6 comprised in the tool 1. By ejecting the oxidoreductase enzyme towards the inner surface 3 of the borehole casing 2, the oxidoreductase enzyme comes in contact with the inner surface 3 and liquid or solid particles in vicinity of the inner surface 3. Studies have shown that corrosion of the inner surface may be inhibited in less than about 5 hours by this method.

As shown in Fig. 2, bacteria and/or archaea other particles or organisms may be comprised in a biofilm 5 entirely or partially covering the inner surface 3. The method according to the invention may comprise a step of reducing microaerobic growth of organisms in a downhole biofilm 5 on the inner surface 3 of the casing or killing organisms in said biofilm.

Biofilm deposits increase corrosion of metals. The colonisation of surfaces by microorganisms and the products associated with microbial metabolic processes create environments that differ greatly from the bulk solution. Low oxygen environments at the biofilm/substrate surface, for example, provide conditions where highly destructive anaerobic organisms such as sulphate-reducing bacteria thrive. This leads to microbially induced corrosion (MIC), a particularly insidious form of corrosion which can result in localised, pitting corrosion rates 1000-fold higher than that experienced for the rest of the system. In extreme cases, MIC leads to perforations, equipment failure, and expensive reconditioning operations within a short period of time.

Inhibiting corrosion by oxidoreductase enzymes in downhole environments occurs in less than about 5 hours and therefore constitutes a very effective method of avoiding corrosion and/or fouling in downhole environments.

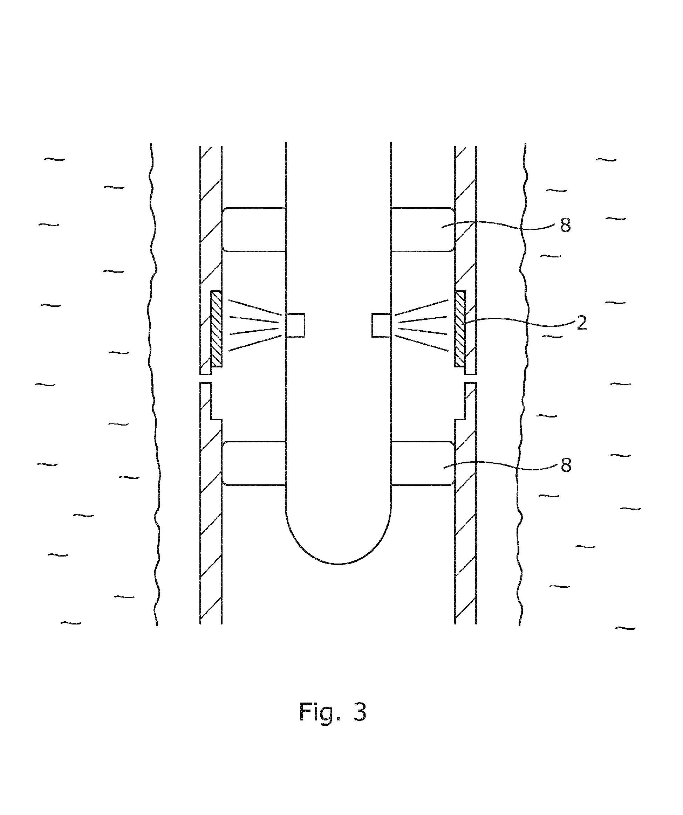

Thin biofilms may be treated with oxidoreductase enzymes in very low concentrations. However, by increasing the concentration, inhibition of the corrosion may be obtained in less than 5 hours. In order to increase concentration levels e.g. in sections of the borehole casing 2 with very thick layers of biofilm 5, these sections may be sealed off by flow hindering elements 8 as shown in Fig. 3.

The biofilm may comprise one or several species of bacteria and/or archaea. The bacteria and/or archaea may be anaerobe or aerobe bacteria and/or archaea or a mixture thereof. The biofilm may contain one or several types of microorganisms selected from the group consisting of bacteria, fungi, algae, archaea and archaebacteria.

Especially peroxidase enzymes are suitable for downhole use, and the oxidoreductase enzyme may therefore preferably be selected from a group consisting of NADH peroxidase, NADPH peroxidase, fatty-acid peroxidase, cytochrome-c peroxidase, catalase, peroxidase, iodide peroxidase, glutathione peroxidase, chloride peroxidase, L-ascorbate peroxidase, phospholipid-hydroperoxide glutathione peroxidase, manganese peroxidase, lignin peroxidase, peroxiredoxin, versatile peroxidase, glutathione amide-dependent peroxidase, bromide peroxidase, dye decolourising peroxidase, chloroperoxidase, iodoperoxidase, prostamide/prostaglandin F2a synthase, catalase-peroxidase and haloperoxidase.

Downhole environments may *inter alia* be populated by organisms such as anoxygenic photoheterotrophs such as Blastochloris sp., denitrifiers, such as Azoarcus sp., Dechloromonas sp., Pseudomonas sp., Thauera sp., Vibrio sp., iron-reducing bacteria, such as Geobacter sp., Shewanella sp., sulphate-reducing bacteria, such as Desulfovibrio sp., Desulfobacterium sp. Desulfobacula sp., methanogens, such as Methanothermobacter sp., Methanobacter sp., Methanobrevibacter sp., Methanococcus sp., Methanosarcina sp. Other microbes include Enterococcus sp., Rhodococcus sp. Marinobacter sp., Acinetobacter sp., Halomonas sp., Sinorhizobium sp., Rhizobium sp., Agrobacterium sp., Comamonas sp., Hydrocarboniphaga sp., Thermoanaerobacter sp., Nitrospira sp., Rhodocyclus sp., Sphinogobacterium sp., Thermotoga sp., Thermodesulfovibrio sp., Fervidobacterium sp., Leptospirillium sp., Thermovenabulum sp., and Thermotogales sp.

Growth of these organisms may be inhibited by the above-mentioned peroxidase enzymes, but may especially effectively be inhibited by haloperoxidase enzymes selected from the group of haloperoxidases consisting of chloroperoxidase, bromoperoxidase and iodoperoxidase, which are oxidising halides. Therefore, one or several different haloperoxidases are preferably used in methods according to the invention.

The haloperoxidases suitable for being incorporated in the composition of the invention include chloro-, bromo- and iodo-peroxidases. Haloperoxidases form a class of enzymes, which are able to oxidise halides (Cl-, Br-, I-) in the presence of hydrogen peroxide or a hydrogen peroxide generating system to the corresponding hypohalous acids.

There are three types of haloperoxidases, classified according to their specificity for halide ions: Chloroperoxidases (E.C. 1.11.1.10) which catalyse formation of hypo-chlorite or hypochloric acid from chloride ions, hypobromite from bromide ions and hypoiodite from iodide ions; Bromoperoxidases which catalyse formation of hypobromite from bromide ions and hypoiodite from iodide ions; and iodoperoxidases (E.C. 1.11.1.8) which solely catalyze the formation of hypoiodite from iodide ions. Hypoiodite, however, undergoes spontaneous disproportionation to iodine and thus iodine is the observed product. These hypohalite compounds may subsequently react with other compounds forming halogenated compounds. Haloperoxidases may be isolated from various organisms: mammals, marine animals, plants, algae, lichen, fungi, archaea and bacteria. It is generally accepted that haloperoxidases are the enzymes responsible for the formation of halogenated compounds in nature, although other enzymes may be involved. Haloperoxidases have been isolated from many different fungi, in particular from the fungus group dematiaceous hyphomycetes, such as Caldariomyces, e.g., C. fumago, Alternaria, Curvularia, e.g., C. verruculosa and C. inaequalis, Drechslera, Ulocladium and Botrytis.

Haloperoxidases have also been isolated from bacteria such as Pseudomonas, e.g., P. pyrrocinia and Streptomyces, e.g., S. aureofaciens or from archaea.

Determination of haloperoxidase activity may be carried out by microtiter assays and performed by mixing 100 µl of haloperoxidase sample (about 0.2 µg/ml) and 100 µl of 0.3 M sodium phosphate pH 7 buffer-0.5 M potassium bromide-0.008 percent phenol red, adding the solution to 10 µl of 0.3 percent H₂O₂, and measuring the absorption at 595 nm as a function of time.

Assays using monochlorodimedone (Sigma M4632, [epsilon]=20000 Mcmat 290 nm) as a substrate are performed as described below. The decrease in absorption at 290 nm is measured as a function of time. Assays are performed in 0.1 M sodium phosphate or 0.1 M sodium acetate, 50 µM monochlorodimedone, 10 mM KBr/KCl, and 1 mM H2O2 using a haloperoxidase concentration of about 1 µg/ml. One HU is defined as 1 µM of monochlorodimedone chlorinated or brominated per minute at pH 5 and 30 degrees Celsius.

Due to elevated downhole temperatures, enzymes are preferably thermophile or hyperthermophile in order to withstand temperatures above 50 degrees Celsius, such as above 60 degrees Celsius, such as above 70 degrees Celsius, such as above 80 degrees Celsius, such as above 90 degrees Celsius, such as above 100 degrees Celsius, such as above 110 degrees Celsius, such as above 120 degrees Celsius, such as above 130 degrees Celsius, such as above 140 degrees Celsius, such as above 150 degrees Celsius, such as even above 200 degrees Celsius.

Biofilms on mechanical devices may cause clogging or malfunction of the mechanical device. This biofilm on mechanical devices may be inhibited by contacting the mechanical device and biofilm with an oxidoreductase enzyme. The invention further relates to a method wherein contacting of the inner surface of the downhole casing with an oxidoreductase enzyme is carried out by means of a jetting tool 17. A fluid comprising the oxidoreductase enzymes is contained in a fluid chamber of a jetting tool 17, and after pressurising the chamber either by a pumping device downhole pressurising locally in the jetting tool chamber or a pumping device uphole e.g. pressurising the entire borehole casing above the jetting tool 17, the fluid comprising the oxidoreductase enzyme may be jetted through a nozzle head towards the inner surface of the casing in a jet stream, thereby contacting the inner surface of the casing with an oxidoreductase enzyme in the jet stream.

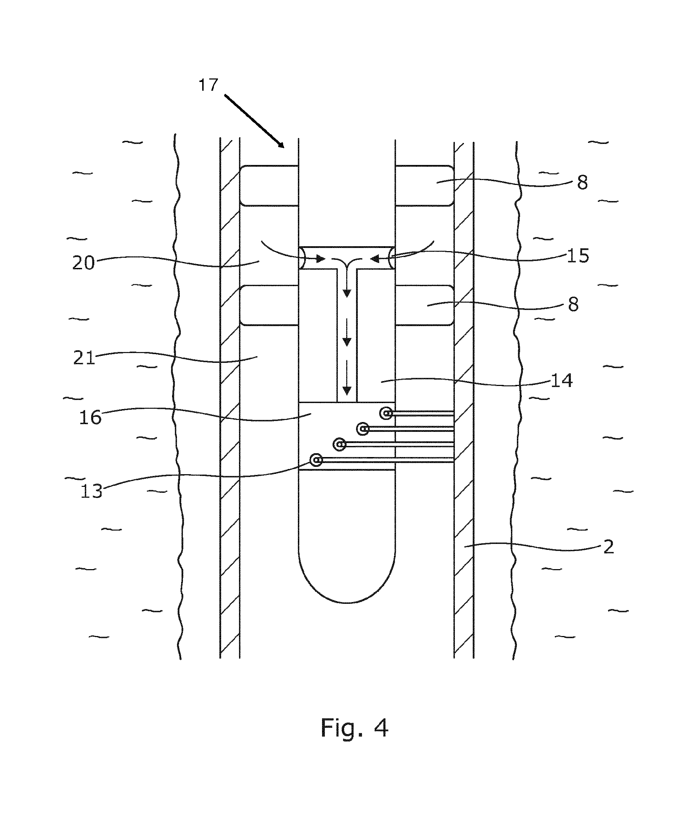

Fig. 4 shows a cleaning tool 1 comprising a jetting tool 17 comprising a tool housing 14 and an inlet 15 for letting well fluid into the tool 1 and the inlet 15 is inside the tool in fluid communication with the nozzles 13. The well fluid travels in through the inlet and out through the nozzle head 16, illustrated with arrows. The cleaning tool is submerged into the casing 3 in the well, and a flow hindering element 8 arranged outside the housing 14 is set or inflated so that it divides the casing 3 in a first 20 and a second casing part 21. Thereby, the well fluid in the first casing part 21 can be pressurised and the fluid is forced into the inlets 15 and out through the nozzles 13 in order to clean the casing or elements therein. Thus, the second part of the casing 21 has a substantially lower well fluid pressure so that the high pressurised well fluid in the first part 20 can be ejected as jets in the well fluid in the second part of the casing with highly pressurised fluid. In some embodiments, the cleaning fluid may therefore be fluid from the casing jetted through the nozzles and not a special cleaning fluid contained in a fluid chamber in the jetting tool 17.

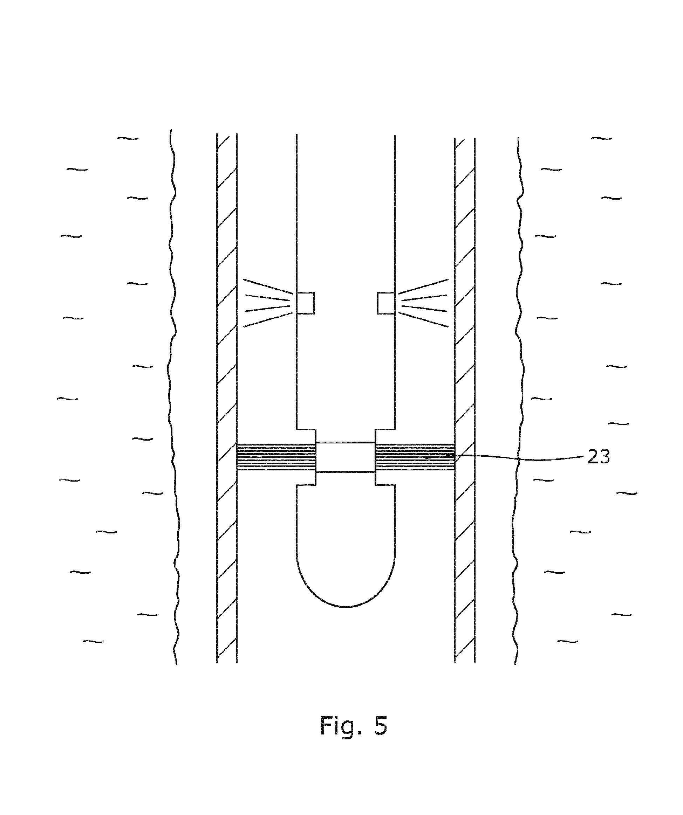

Furthermore, prior to applying the enzyme, an initial cleaning step of cleaning away rigid debris and other precipitated materials, such as scales, may be carried out. This cleaning step may be performed by an additional mechanical cleaning tool comprised in a tool string for this downhole operation. A mechanical cleaning tool for carrying out the above-mentioned mechanical cleaning using brushes has been demonstrated in Fig. 5. The mechanical cleaning tool may comprise brushes 23 for brushing the interior of a casing downhole in order to clean the casing to be substantially free from the rigid debris and other precipitated materials.

In a method according to the invention, the initial cleaning step for cleaning away rigid debris and other precipitated materials, such as scales, may alternatively be carried out by the jetting cleaning tool. If rigid debris and other precipitated materials are less attached to the inner surface of the borehole casing, mechanical cleaning may not be required. Also the jetting tool 17 may be very powerful to remove even rigid debris and other precipitated materials strongly attached to the inner surface of the borehole. By using a jetting tool 17 for cleaning as well as for the ejection of enzymes, the enzymes may be injected into the fluid chamber comprising the pressurised fluid after the step of cleaning with the jetting tool 17. This would enable a two step cleaning method using only one tool, i.e. the jetting tool, to clean the casing to be substantially free from the rigid debris and other precipitated materials.

As known from examples such as an ordinary carwash, a wax layer may be arranged on a cleaned surface to extend the period of maintaining a clean surface and to inhibit corrosion effects. Applying wax to a surface in a downhole environment is, however, a much more difficult task due to the nature of the downhole environment being a casing filled with various fluids, e.g. drilling muds, oil, water, acid etc. Therefore, application of a light and relatively volatile substance such as a wax is quite difficult. However, by injecting wax particles into the pressurised fluid chamber of the jetting tool 17 and thereafter ejecting them towards the inner surface of the borehole casing in a jet stream may enable the user to arrange a layer of wax on the inner surface.

Furthermore, experiments have shown that in very troublesome conditions such as during high fluid flow rates in the borehole casing, very good results have been obtained by encapsulating relatively heavy ceramic particles such as aluminium oxide particles encapsulated in wax thereby constituting a ceramic carrier material and ejecting these wax-encapsulated ceramic particles towards the inner surface of the borehole casing. These wax-encapsulated ceramic particles are much more easily directed through a flowing fluid, such as by the jetting stream, in order to reach the inner surface of the borehole casing or other mechanical parts, preferably to be covered by a wax layer after cleaning and application of oxidoreductase enzyme since the density of the wax may be significantly increased by the ceramic carrier material. The particles may also be made of another suitable material such as metals, alloys etc.

Furthermore, experiments have also shown that extension of the period wherein the surface is clean by applying a wax layer may be prolonged by adding magnetic particles also encapsulated by wax to increase adherence to the inner surface of the borehole casing by magnetic attraction between particles and casing, when the casing is magnetic.

Other materials such as nano-scaled materials, e.g. self-assembling nanotube layers, graphene layers, nano-crystalline thin films etc. may be used to cover the inner surface of the borehole casing or mechanical casing parts such as sliding sleeves in order to avoid or inhibit rigid debris, precipitated materials and biofilms. The nano-scaled materials may be applied to the casing components before mounting the casing parts in the borehole or before the nano-scaled materials are applied downhole by a downhole tool such as a jetting tool 17.

The preparation of casing part surfaces may include application of nano-scaled materials on pipes, tubes, valves, plugs, collars which may come into contact with borehole fluids.

The haloperoxidases suitable for being incorporated in the composition of the invention include chloro-, bromo- and iodo-peroxidases. Haloperoxidases form a class of enzymes, which are able to oxidise halides (Cl-, Br-, I-) in the presence of hydrogen peroxide or a hydrogen peroxide generating system to the corresponding hypohalous acids.

There are three types of haloperoxidases, classified according to their specificity for halide ions: Chloroperoxidases (E.C. 1.11.1.10) which catalyse formation of hypo-chlorite or hypochloric acid from chloride ions, hypobromite from bromide ions and hypoiodite from iodide ions; Bromoperoxidases which catalyse formation of hypobromite from bromide ions and hypoiodite from iodide ions; and iodoperoxidases (E.C. 1.11.1.8) which solely catalyze the formation of hypoiodite from iodide ions. Hypoiodite, however, undergoes spontaneous disproportionation to iodine and thus iodine is the observed product. These hypohalite compounds may subsequently react with other compounds forming halogenated compounds.

Haloperoxidases may be isolated from various organisms: mammals, marine animals, plants, algae, lichen, fungi, archaea and bacteria. It is generally accepted that haloperoxidases are the enzymes responsible for the formation of halogenated compounds in nature, although other enzymes may be involved.

Haloperoxidases have been isolated from many different fungi, in particular from the fungus group dematiaceous hyphomycetes, such as Caldariomyces, e.g., C. fumago, Alternaria, Curvularia, e.g., C. verruculosa and C. inaequalis, Drechslera, Ulocladium and Botrytis.

Haloperoxidases have also been isolated from bacteria such as Pseudomonas, e.g., P. pyrrocinia and Streptomyces, e.g., S. aureofaciens or from archaea.

Although the invention has been described in the above in connection with preferred embodiments of the invention, it will be evident for a person skilled in the art that several modifications are conceivable without departing from the invention as defined by the following claims.

## Claims

1. A method of inhibiting corrosion of a downhole casing (2) having an inner surface (3), comprising the step of:
- contacting said inner surface of the downhole casing with an oxidoreductase enzyme (4), wherein inhibiting occurs in less than about 5 hours.

2. The method of claim 1, further comprising the step of:
- reducing microaerobic growth of organisms in a downhole biofilm (5) on the inner surface of the casing, or killing organisms in said biofilm.

3. A method of inhibiting a downhole biofilm on an inner surface of a downhole casing, comprising the step of:
- contacting said downhole biofilm with an oxidoreductase enzyme, wherein inhibiting occurs in less than about 5 hours.

4. The method of claim 3, further comprising the step of:
- reducing microaerobic growth of organisms in the downhole biofilm on the inner surface of the casing, or killing organisms in said biofilm.

5. The method according to any of claims 1-4, wherein said oxidoreductase enzyme is selected from the group consisting of NADH peroxidase, NADPH peroxidase, fatty-acid peroxidase, cytochrome-c peroxidase, catalase, peroxidase, iodide peroxidase, glutathione peroxidase, chloride peroxidase, L-ascorbate peroxidase, phospholipid-hydroperoxide glutathione peroxidase, manganese peroxidase, lignin peroxidase, peroxiredoxin, versatile peroxidase, glutathione amide-dependent peroxidase, bromide peroxidase, dye decolourising peroxidase, prostamide/prostaglandin F2a synthase and catalase-peroxidase.

6. The method according to any of claims 1-5, wherein said oxidoreductase enzyme is a haloperoxidase selected from a group of haloperoxidases consisting of chloroperoxidase, bromoperoxidase and iodoperoxidase.

7. The method according to any of claims 1-6, wherein said oxidoreductase enzyme is viable at temperatures exceeding 100 degrees Celsius.

8. A method of inhibiting microbial biofilm-induced corrosion or fouling of a surface or mechanical device comprising treating a surface biofilm or mechanical device biofilm with an oxidoreductase enzyme.

9. The method according to any of the preceding claims, wherein the contacting of said inner surface of the downhole casing with an oxidoreductase enzyme comprises the steps of:
- providing a fluid comprising the oxidoreductase enzymes in a fluid chamber of a jetting tool (17),
- activating a pumping device in the jetting tool (17) and pressurising the fluid chamber of the jetting tool,
- jetting the fluid through a nozzle head towards the inner surface of the casing in a jet stream, and
- contacting the inner surface of the casing with an oxidoreductase enzyme in a jet stream.

10. The method according to any of the preceding claims, further comprising an initial cleaning step of cleaning away rigid debris and other precipitated materials, such as scales, by application of a mechanical cleaning tool comprising brushes for brushing the interior of a casing downhole in order to clean the casing to be substantially free from the rigid debris and other precipitated materials.

11. The method according to any of the preceding claims, further comprising a final step of arranging a wax layer on the inner surface of the casing comprising the steps of:
- providing a fluid comprising wax particles in a first casing part,
- activating a pumping device and pressurising the first casing part,
- jetting the fluid comprising wax particles through a nozzle head towards the inner surface of the casing in the second casing part in a jet stream,
- arranging the wax layer on the inner surface of the casing by the jet stream.

12. The method according to claim 11, wherein the wax particles comprise ceramic particles having a significantly higher density than the wax.

13. The method according to claim 11, wherein the wax particles comprise magnetic particles, wherein the wax particles comprising magnetic particles are retained near the casing wall due to magnetic attraction between the casing and the magnetic particles.

14. The method according to any of the preceding claims, further comprising a final step of arranging a layer of nanoparticles on the inner surface of the casing comprising the steps of:
- providing a liquid comprising nanoparticles in a first casing part,
- activating a pumping device and pressurising the first casing part,
- jetting the liquid through a nozzle head towards the inner surface of the casing in the second casing part in a jet stream,
- arranging the layer of nanoparticles on the inner surface of the casing by the jet stream.

15. A method according to any of the preceding claims, further comprising an initial preparation step of preparing surfaces of downhole casing parts such as casings, pipes, tubes, valves, plugs, collars which may come in contact with borehole fluids comprising the steps of:
- coating a surface of a casing part with a nanocover material, and mounting the coated casing part to the casing.
